(19) **Europäisches Patentamt European Patent Office Office européen des brevets**

(11) **EP 4 585 375 A1**

(12) **DEMANDE DE BREVET EUROPEEN**

(43) Date de publication:
**16.07.2025 Bulletin 2025/29**

(21) Numéro de dépôt: **25150648.1**

(22) Date de dépôt: **08.01.2025**

(51) Classification Internationale des Brevets (IPC):
**B25J 9/16** [(2006.01)]

(52) Classification Coopérative des Brevets (CPC):
**B25J 9/1612; B25J 9/163;** G05B 2219/39507;
G05B 2219/39533; G05B 2219/39536

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **10.01.2024 FR 2400222**

(71) Demandeur: **Commissariat à l'Energie Atomique et aux Energies Alternatives 75015 Paris (FR)**

(72) Inventeurs:
• **GROSSARD, Mathieu 91191 Gif-sur-Yvette Cedex (FR)**
• **ALOUI, Saifeddine 38000 Grenoble (FR)**
• **AYRAL, Theo 38000 Grenoble (FR)**

(74) Mandataire: **Ipsilon 11 rue Saint-Georges 75009 Paris (FR)**

(54) **PRÉHENSEUR ROBOTIQUE ET PROCÉDÉ DE COMMANDE**

(57) Préhenseur robotique comportant :

Un ou plusieurs doigts, au moins un actionneur pour agir sur les doigts afin de serrer un objet, le préhenseur comportant au moins un capteur sensible à un mouvement relatif entre l'objet manipulé par le préhenseur et ce dernier, ce capteur délivrant un signal de sortie,
- un système de contrôle configuré pour exécuter au moins un algorithme d'apprentissage automatique entraîné pour délivrer à partir du ou des signaux de sortie provenant du ou des capteurs au moins un score de détection de glissement représentatif de la confiance de l'algorithme sur la présence d'un glissement, et pour transmettre des données de commande aux actionneurs contrôlant le ou les doigts, les données de commande étant générées de manière à lier l'intensité des forces appliquées par le ou les doigts audit score.

Fig.3

## Description

### Domaine technique

La présente invention concerne le domaine de la robotique et en particulier celui de la manipulation d'objets par des préhenseurs, notamment pluri-digitaux.

### Technique antérieure

Les préhenseurs robotiques sont agencés pour saisir des objets, et les déplacer. Ils sont largement utilisés sur les chaînes de montage ou pour des opérations de manutention. Lors du déplacement, il n'est cependant pas rare que l'objet soit déséquilibré et glisse. En effet, les perturbations extérieures peuvent dépasser les forces pouvant être transmises par les points de contact entre les doigts du préhenseur et l'objet. L'adhérence entre l'objet et les doigts est alors perdue et l'objet, soumis aux forces extérieures, commence à glisser. Il arrive également que le poids de l'objet soit tout simplement sous-évalué, les forces gravitationnelles étant plus importantes que les forces transmises par le préhenseur.

Il existe des méthodes connues pour contrer ce phénomène de glissement avec les préhenseurs comportant une pince de serrage. En particulier, certaines méthodes consistent à détecter et réagir au glissement en augmentant la force de serrage de la pince robotique sur l'objet. La force de serrage doit également être contrôlée pour minimiser l'énergie nécessaire et éviter tout endommagement de l'objet.

Dans le cas d'une pince robotique, du fait de la symétrie, les doigts exercent des forces opposées qui s'annulent et permettent de stabiliser l'objet. Lorsque le préhenseur comporte des doigts qui ne sont pas disposés symétriquement, ce qui est le cas d'une « main artificielle », l'augmentation du serrage peut induire un mouvement non désiré de l'objet.

Dans le cadre de préhenseurs comportant plus de 3 doigts, il est connu de chercher à déterminer une matrice GRASP, qui est une représentation des points de contact entre l'objet et le préhenseur, permettant la projection des forces et couples appliqués dans le référentiel du préhenseur vers le référentiel de l'objet. A partir de cette matrice, on cherche à résoudre un problème d'optimisation consistant à déterminer les efforts minimaux à appliquer pour arrêter le glissement tout en permettant le mouvement désiré de l'objet, et en respectant les limites dynamiques du préhenseur.

Le Chapitre 5 « Fundamentals of Grasping, Cours CS 237B: Principles of Robot Autonomy II », Université Stanford, J. Bohg, M. Pavone, et D. Sadigh, enseigne que l'optimisation des forces avec des contraintes de manipulation et de friction nécessite des informations sur les forces en 6 dimensions en chaque point de contact entre l'objet et le préhenseur. Cela tend à rendre la mise en oeuvre complexe et coûteuse.

La demande EP4048480 décrit un bras robotique agencé pour permettre la détection d'un glissement à partir d'une pluralité de capteurs destinés à fournir des données multimodales. L'utilisation de données multimodales vise à permettre un croisement de données pour la détection d'un glissement.

La demande US 2020/019864 décrit des méthodes d'apprentissage automatique destinées à collecter des informations lors de manipulations robotiques d'objets de sorte à automatiser la mise en oeuvre de telles manipulations.

L'article "A Novel Incipient Slip Degree Evaluation Method and Its Application in Adaptative Control of Grasping Force", Ruomin Sui et al., 1545-5955, 2023 IEEE, décrit un procédé de contrôle de la force de serrage d'une pince robotique expérimentale à deux doigts parallèles, reposant sur la connaissance de la distribution des forces de contact à l'aide de capteurs optiques et sur un calcul du coefficient de friction.

L'article « Spectro-Temporal Recurrent Neural Network for Robotic Slip Détection with Piezoelectric Tactile Sensor", Théo Ayral et al., 2023 IEEE/ASME International Conférence on Advanced Intelligent Mechatronics (AIM), 28-30 juin 2023, Seattle, Washington, USA, décrit une méthode de détection d'un glissement à partir d'un réseau de neurones de type RNN fournissant une sortie binaire : présence d'un glissement ou absence d'un glissement.

L'article « Detecting and Controlling Slip through Estimation and Control of the Sliding Velocity », Marco Costanzo et al., Appl. Sci. 2023, 13, 921 décrit une méthode de détection de glissement et d'adaptation du serrage fondée sur l'estimation d'une vitesse de glissement et d'état de friction entre un objet et un préhenseur.

L'article « Force estimation and slip detection/classification for grip control using a biomimetic tactile sensor », Su Zhe et al. 2015 IEEE-RAS 15th International Conférence on Humanoid Robots (Humanoids), Seoul, Korea (South), 2015, pp. 297-303 décrit un robot préhenseur équipé de capteurs « BioTacs » configurés pour fournir des données ensuite analysées pour estimer les forces appliquées en différents points du préhenseur. L'article décrit également une méthode de classification binaire du type de glissement détecté (selon qu'il soit rotatif ou linéaire).

La demande US2021/122039A1 décrit un robot de type « pick and place » capable de détecter le glissement de l'objet déplacé en déterminant les forces appliquées en différents points de l'effecteur terminal du robot qui peut donc prendre la forme d'un préhenseur.

**Exposé de l'invention**

Il existe un besoin pour remédier aux inconvénients de l'art antérieur et améliorer la manipulation d'un objet par un préhenseur robotique, en particulier un préhenseur comportant plus de 2 doigts, de façon à adapter le serrage au mieux, réagir rapidement à l'apparition d'un glissement, éviter l'endommagement de l'objet par un serrage excessif tout en limitant la consommation d'énergie, et pour perfectionner les méthodes de contrôle du serrage existantes, notamment afin de les rendre accessibles et portatives.

Il demeure encore un intérêt pour réduire la complexité des préhenseurs robotiques, notamment des préhenseurs robotiques comportant plus de 2 doigts.

L'invention vise à répondre à tout ou partie de ces besoins.

**Résumé de l'invention**

Préhenseur

L'invention porte, selon un premier de ses aspects, sur un préhenseur robotique comportant :

- un ou plusieurs doigts,
- au moins un actionneur pour agir sur le ou les doigts afin de serrer un objet, le préhenseur comportant au moins un capteur sensible à un mouvement relatif entre l'objet manipulé par le préhenseur et ce dernier, ce capteur délivrant un signal de sortie,
- un système de contrôle configuré pour exécuter au moins un algorithme d'apprentissage automatique entraîné pour délivrer à partir du ou des signaux de sortie provenant du ou des capteurs au moins un score de détection de glissement représentatif de la confiance de l'algorithme sur la présence d'un glissement, et pour transmettre des données de commande aux actionneurs contrôlant le ou les doigts, les données de commande étant générées de manière à lier l'intensité des forces appliquées par le ou les doigts audit score, notamment en augmentant les forces de préhension sur l'objet d'autant plus fortement que le score de détection de glissement est élevé.

De préférence, le système de contrôle est agencé pour ajuster de manière itérative et incrémentale l'intensité des forces exercées par le préhenseur sur l'objet, la valeur de l'incrément étant variable et fonction de la valeur dudit score de détection de glissement à chaque itération.

L'invention permet d'adapter la prise de l'objet par un préhenseur plus rapidement et sans nécessiter d'informations complexes sur les forces et la friction. En particulier, seul un ou plusieurs capteurs de détection de glissement peuvent être utilisés, en plus des éventuels capteurs additionnels permettant de connaître la localisation des points de contact et d'informations concernant la forme ou la configuration du préhenseur, afin de pouvoir localiser et orienter les points de contact dans un même repère, et déterminer l'orientation des forces normales. La connaissance de l'intensité des forces n'est pas nécessaire. La commande des actionneurs peut ainsi s'effectuer sans calcul d'un coefficient de friction et/ou sans mesure d'une force de contact.

L'invention est applicable à la préhension de tout type d'objet.

De par la non nécessité d'avoir à mesurer des forces, l'invention peut permettre une diminution de la complexité des capteurs, ce qui peut notamment permettre de réduire la taille du préhenseur. La manipulation d'objets plus petits est ainsi facilitée.

L'invention permet également de limiter la consommation d'énergie, en limitant les forces de serrage à ce qui est juste nécessaire pour tenir l'objet. En effet, lorsque le préhenseur est relativement « sûr » d'être en présence d'un glissement, les forces de serrage peuvent être augmentées rapidement pour arrêter le glissement. En cas d'incertitude sur la détection du glissement, le préhenseur n'augmente pas le serrage ou l'augmente faiblement en attendant de voir comment évolue la détection. S'il n'y avait pas de glissement effectif, on évite ainsi d'augmenter la force de serrage pour rien, au détriment de la consommation énergétique. S'il y avait un glissement effectif, notamment lié à la force de gravité, alors celui-ci va avoir tendance à s'accélérer, ce qui va entraîner une diminution de l'incertitude de détection, et le préhenseur pourra réagir correctement.

L'ajustement des forces appliquées par le préhenseur, dépendant du score de détection de glissement permet ainsi d'avoir une réaction mesurée face à l'éventuel glissement et de préserver plus facilement l'intégrité de l'objet manipulé.

L'algorithme d'apprentissage automatique peut comporter au moins un réseau de neurones, notamment de type RNN ou TCN, agencé pour classifier au moins un signal d'entrée provenant d'au moins l'un desdits capteurs en deux classes correspondant respectivement à la présence d'un glissement et à l'absence d'un glissement, le réseau comportant une dernière couche avec deux neurones de sortie prenant des valeurs normalisées, une fonction faisant dépendre ces valeurs normalisées des scores de chaque classe, cette fonction de normalisation étant de préférence une fonction softmax.

Le réseau de neurones peut recevoir en entrée des données correspondant à des fenêtres temporelles de mesure successives.

Le ou les capteurs peuvent comporter au moins un détecteur de vibrations, notamment piézoélectrique.

Le système de contrôle peut être agencé pour effectuer une analyse spectrale du signal délivré par ce ou ces capteurs, par exemple par l'application d'une transformée de Fourrier rapide, afin de générer un spectrogramme, et ainsi connaître le contenu fréquentiel du signal. Cette analyse spectrale peut se faire de manière itérative, de façon à connaître son évolution temporelle, et le réseau de neurones peut être entraîné pour classifier un segment temporel du spectrogramme.

Le système de contrôle peut être agencé pour délivrer un ensemble de scores de détection de glissement locaux pour différents capteurs, et générer le score de détection de glissement à partir de ces scores de détection locaux, notamment en prenant le maximum des scores de détection locaux, la médiane des scores de détection locaux, la moyenne des scores de détection locaux, le troisième quartile des scores de détection locaux ou le mode des score de détection locaux, et de préférence le score de détection correspond au maximum des scores de détection locaux.

Au moins un doigt, de préférence plusieurs doigts, de préférence encore tous les doigts, comportent plusieurs phalanges, chacun des doigts comportant au moins un capteur sensible au glissement, notamment un capteur piézoélectrique. Le préhenseur peut comporter au moins deux doigts, mieux au moins 3 doigts, voire au moins 5 doigts, chaque doigt comportant de préférence plusieurs phalanges. Le préhenseur peut également comporter des capteurs configurés pour détecter les points de contact, notamment des capteurs piézorésistifs.

Le système de contrôle peut être agencé pour faire l'acquisition d'une répartition des points de contact entre l'objet manipulé et les doigts du préhenseur et calculer des ratios définissant des rapports de proportionnalité à maintenir entre des forces internes de serrage appliquées aux points de contact, les rapports étant calculés à partir de la répartition des points de contact et de l'orientation des doigts dans un repère lié au préhenseur, les forces internes étant les forces appliquées au points de contact qui s'équilibrent entre elles.

Le calcul des rapports d'intensité des forces aux différents points de contact peut comporter la détermination d'une matrice GRASP représentative des forces appliquées par le préhenseur sur l'objet aux différents points de contact, et le calcul d'une base du noyau de la matrice, la matrice GRASP étant déterminée au moyen de la localisation des points de contact et de l'orientation des doigts dans un repère lié au préhenseur. Les forces appliquées sur l'objet peuvent être modifiées d'un facteur proportionnel au score de détection de glissement tout en respectant les rapports d'intensité appliqués aux différents points de contact tels que déterminés par la matrice GRASP.

Les capteurs tactiles sont de préférence agencés afin de permettre chacun une détection sur une surface étendue. La surface étendue peut couvrir tout le doigt ou uniquement la surface opérationnelle du préhenseur qui a vocation à être en contact avec l'objet manipulé, pour les capteurs de points de contacts.

Les capteurs de détection du glissement et les capteurs de points de contacts peuvent être indépendants. Un seul capteur de détection du glissement peut être suffisant pour le préhenseur complet.

Le système de contrôle peut comporter un ou plusieurs processeurs, un ou plusieurs microcontrôleurs, un ou plusieurs ordinateurs personnels, un ou plusieurs automates.

Le système de contrôle peut être au moins en partie embarqué sur le préhenseur.

Procédé

L'invention a encore pour objet, selon un autre de ses aspects, un procédé de contrôle d'un préhenseur manipulant un objet, notamment un préhenseur selon l'invention tel que défini plus haut, le préhenseur comportant :

- un ou plusieurs doigts,
- au moins un actionneur pour agir sur le ou les doigts afin de serrer l'objet,
- au moins un capteur sensible à un mouvement relatif entre l'objet manipulé par le préhenseur et ce dernier, ce capteur délivrant un signal de sortie,

le procédé comportant :

la génération d'au moins un score de détection de glissement à l'aide d'au moins un algorithme d'apprentissage automatique entraîné pour délivrer, à partir du ou des signaux de sortie provenant du ou des capteurs, ledit score, ce dernier étant représentatif de la confiance de l'algorithme sur la présence d'un glissement, et

la commande du ou des actionneurs contrôlant le ou les doigts de manière à lier l'intensité des forces appliquées par le ou les doigts audit score, notamment en augmentant les forces de préhension sur l'objet d'autant plus fortement que le score de détection de glissement est élevé.

Un tel procédé permet de s'affranchir de l'estimation et de la modélisation des frottements entre l'objet et le préhenseur.

L'intensité des forces exercées par le préhenseur sur l'objet peut être ajustée de manière itérative et incrémentale, la valeur de l'incrément étant variable et fonction de la valeur dudit score de détection de glissement à chaque itération.

De telles itérations permettent en particulier de minimiser les forces nécessaires à l'arrêt du glissement, et ainsi éviter tout endommagement de l'objet et des pertes d'énergie inutiles.

Dans des exemples de mise en oeuvre du procédé de contrôle, l'ajustement de l'intensité peut comporter la comparaison du score de détection de glissement à au moins une valeur seuil ou échelle de référence, la détermination de l'ajustement étant effectuée relativement à cette comparaison. Par exemple, lorsque le score de détection de glissement est inférieur ou égal à une valeur seuil, aucun ajustement n'est effectué, et similairement lorsque le score de détection de glissement est supérieur ou égal à une valeur seuil, aucun ajustement n'est effectué.

L'acquisition d'au moins un signal représentatif d'un mouvement relatif négligeable n'est ainsi pas systématiquement prise en compte. Cela permet avantageusement d'éviter un ajustement perpétuel des forces appliquées par le préhenseur autour d'une force qui serait optimale.

L'algorithme d'apprentissage automatique peut comporter au moins un réseau de neurones, notamment de type RNN ou TCN, agencé pour classifier au moins un signal d'entrée provenant d'au moins l'un desdits capteurs en deux classes correspondant respectivement à la présence d'un glissement et à l'absence d'un glissement, le réseau comportant une dernière couche avec deux neurones de sortie prenant des valeurs normalisées, une fonction faisant dépendre ces valeurs normalisées des scores de chaque classe, cette fonction de normalisation étant de préférence une fonction softmax.

Le ou les capteurs peuvent comporter au moins un détecteur de vibrations, notamment piézoélectrique, et le procédé peut comporter une analyse spectrale du signal afin de générer un spectrogramme. Le réseau de neurones peut être entraîné pour classifier un segment temporel du spectrogramme.

Un ensemble de scores de détection de glissement locaux peut être généré pour différents capteurs, et le score de détection de glissement peut être calculé à partir de ces scores de détection locaux, notamment en prenant le maximum des scores de détection locaux, la médiane des scores de détection locaux, la moyenne des scores de détection locaux, le troisième quartile des scores de détection locaux ou le mode des score de détection locaux, et de préférence le score de détection correspond au maximum des scores de détection locaux.

Un découplage des forces internes et des forces de manipulation peut être réalisé. Les forces internes correspondent aux forces appliquées aux points de contact qui s'équilibrent entre elles. Les forces de préhension $F_c$ appliquées par le préhenseur sur l'objet manipulé peuvent s'écrire : $F_c = F_m + F_0$, où $F_m$ correspond aux forces de manipulation et $F_0$ aux forces internes.

Les rapports d'intensité ne tiennent de préférence compte que des forces internes.

Une acquisition d'une répartition des points de contact entre l'objet manipulé et les doigts du préhenseur peut ainsi être effectuée, et des ratios définissant des rapports de proportionnalité à maintenir entre des forces internes de serrage appliquées aux points de contact peuvent être calculés, les rapports étant calculés à partir de la répartition des points de contact et de l'orientation des doigts dans un repère lié au préhenseur, les forces internes étant les forces appliquées au points de contact qui s'équilibrent entre elles.

Le calcul des rapports d'intensité des forces aux différents points de contact peut comporter la détermination d'une matrice GRASP représentative des forces appliquées par le préhenseur sur l'objet aux différents points de contact, et le calcul d'une base du noyau de la matrice, $f_0 = (x_i \mid i \, G \, [1 ; N])$ ', N étant le nombre de points de contact entre le préhenseur et l'objet manipulé, la matrice GRASP étant déterminée au moyen de la localisation des points de contact et de l'orientation des doigts dans un repère lié au préhenseur. Les forces appliquées sur l'objet peuvent être modifiées d'un facteur proportionnel au score de détection de glissement tout en respectant les rapports d'intensité appliqués aux différents points de contact tels que déterminés par la matrice GRASP.

De préférence, la base choisie ne comporte pas de valeurs négatives, correspondant à des forces attractives, par exemple de succion.

Des méthodes heuristiques peuvent être mises en oeuvre pour sélectionner une base. De telles méthodes permettent de sélectionner une base pertinente, notamment compatible avec les contraintes physiques de configuration et de contrôle du préhenseur.

La détermination de rapports d'intensité revient à chercher les coefficients $x_i$, résolvant l'équation :

[Math 1]

$$G.\vec{f_0} = \vec{0},$$

$$f_0 = (x_i \mid i \in [1 ; N])$$

Les forces de serrage étant dans le noyau de la matrice GRASP, elles ne génèrent pas de déplacement de l'objet.

[Math 2]

$$G.(\overrightarrow{f_m} + \overrightarrow{f_0}) = G.\overrightarrow{f_m}$$

La matrice G comporte au moins la localisation des points de contact et l'orientation de la base associée au point de contact, et le modèle utilisé pour décrire la nature du contact (nombre de composantes des forces, modèle de friction). La matrice GRASP G peut être déterminée à partir de la localisation des points de contacts et de l'orientation des repères associés.

La matrice GRASP prend en compte les forces normales aux points de contacts, et éventuellement les forces tangentielles et les moments. Ces éléments peuvent être représentés ou non, en fonction des capacités de mesure et de contrôle de ces forces par le préhenseur. La mesure et le contrôle des forces tangentielles et des moments ne sont pas nécessaires à la mise en oeuvre du procédé de l'invention. Dans des exemples de mises en oeuvre, les rapports d'intensité ne tiennent compte que des composantes normales des forces internes. Notamment, on peut utiliser une matrice GRASP en mode « sans friction » pour déterminer les rapports d'intensité entre les forces normales uniquement, permettant de simplifier le contrôle du glissement. Le calcul de ces rapports d'intensité permet de réduire la complexité des capteurs nécessaire au fonctionnement du préhenseur robotique, si besoin.

Le maintien de ces rapports d'intensité entre les forces internes permet d'assurer l'équilibre de l'objet manipulé. Par ailleurs, en découplant les forces internes des forces de manipulation, seule la question de l'équilibre de l'agrippement de l'objet manipulé est prise en compte, la manipulation pouvant être réalisée parallèlement. Ce découplage simplifie l'ajustement des forces et réduit le risque d'apparition de mouvements inattendus.

En particulier, en plus de la localisation, une information d'orientation des forces normales de contact entre l'objet et le préhenseur peut être associée à chaque point de contact, notamment en analysant la forme et la configuration du préhenseur.

Les orientations peuvent être calculées à partir des localisations des points de contact et de la configuration du préhenseur, notamment du positionnement relatif des doigts du préhenseur, du positionnement des phalanges lorsque les doigts sont formés de phalanges, du positionnement du préhenseur par rapport à l'objet.

Le calcul des rapports d'intensité à respecter entre les forces peut être mis en oeuvre de manière itérative parallèlement aux étapes du procédé de contrôle visant à réagir au glissement.

<u>Produit programme d'ordinateur</u>

L'invention porte également sur un produit programme d'ordinateur, notamment enregistré sur un support ou dans une mémoire, comportant des instructions de code qui lorsque le programme est mis en oeuvre par le système de contrôle du préhenseur robotique selon l'invention, conduisent celui-ci à mettre en oeuvre le procédé de contrôle selon l'invention.

**Brève description des dessins**

L'invention pourra être mieux comprise à la lecture de la description détaillée qui va suivre, d'exemples de mise en oeuvre non limitatifs de celle-ci, et à l'examen du dessin annexé, sur lequel :

[Fig 1] la figure 1 illustre de façon partielle et schématique un exemple de préhenseur robotique selon l'invention,
[Fig 2] la figure 2 schématise la détermination d'un point de contact entre le préhenseur et l'objet,
[Fig 3] la figure 3 illustre un exemple de mise en oeuvre d'un procédé de contrôle et du calcul des rapports d'intensité,
[Fig 4] la figure 4 représente la détermination de la répartition des points de contact autour d'un objet maintenu par un préhenseur comportant 3 doigts, et
[Fig 5] la figure 5 illustre un exemple d'ajustement itératif des forces internes du préhenseur au cours du temps.

Dans la suite de la description, les éléments identiques ou de fonctions analogues portent le même signe de référence. Leur description n'est pas reprise en regard de chacune des figures, seules les principales différences entre les modes de réalisation étant mentionnées.

**Description détaillée**

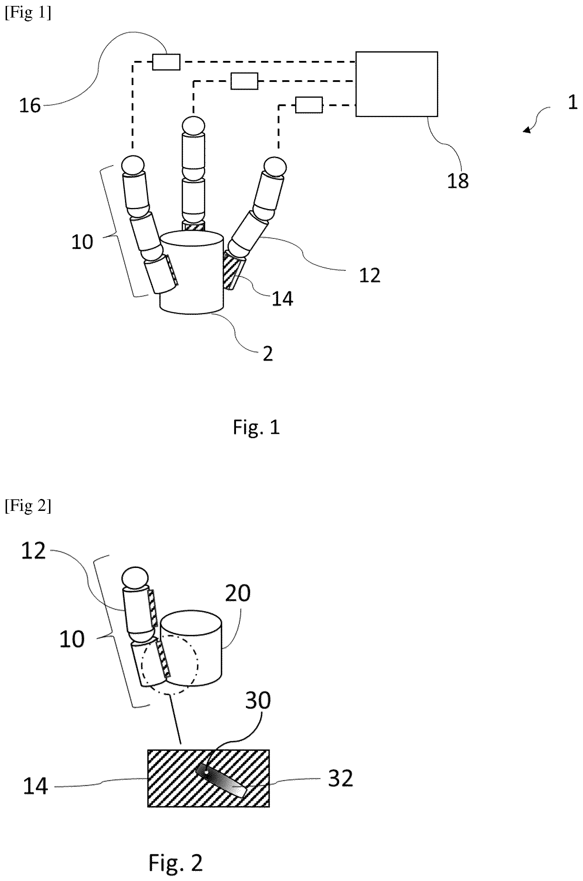

On a illustré à la figure 1 un exemple de préhenseur 1 robotique pluri-digital. Le préhenseur est représenté serrant un objet 20, qui peut être quelconque.

Le préhenseur robotique 1 comporte plusieurs doigts 10, par exemple au nombre de trois, comme illustré.

Les doigts 10 peuvent comporter des phalanges 12, comme illustré.

Chaque doigt comporte au moins un capteur tactile 14.

Dans des exemples de réalisation préférés, chaque phalange 12 de chaque doigt 10 comporte au moins un capteur tactile 14, comme représenté à la figure 2.

Le préhenseur 1 comporte également des actionneurs 16 agencés pour actionner les doigts et permettre la manipulation de l'objet 20.

Les actionneurs 16 sont connectés à un système de contrôle 18 qui les commande en fonction notamment des mouvements qu'ils doivent transmettre à l'objet.

Le système de contrôle peut être réalisé avec tous moyens de calcul adaptés, et comporte par exemple un ou plusieurs processeurs qui exécutent des instructions de code permettant de traiter les signaux des capteurs et de commander les actionneurs, en fonction des manipulations de l'objet à faire telles que programmées par un utilisateur, et contrôler automatiquement les actionneurs pour serrer l'objet avec une force suffisante pour éviter le glissement de l'objet saisi.

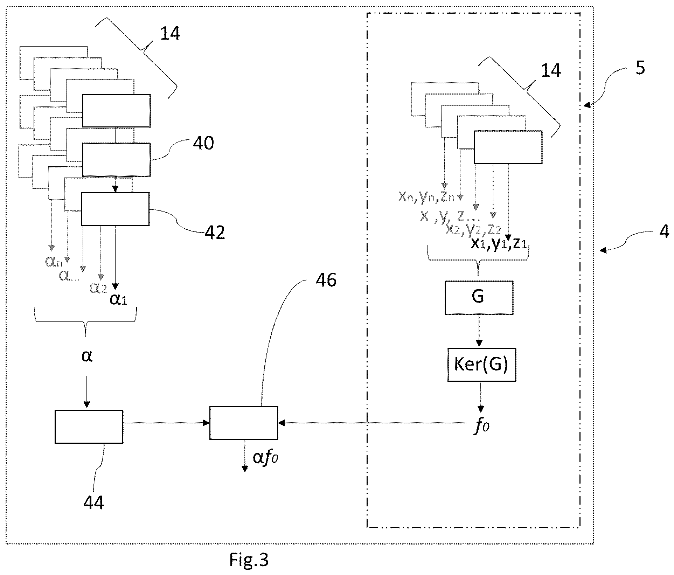

La détermination des rapports d'intensité à maintenir entre les forces peut s'effectuer de manière itérative par la mise en oeuvre du procédé de calcul 5 illustré à la figure 3.

Le contrôle des actionneurs pour éviter le glissement peut s'effectuer de manière itérative par la mise en oeuvre du procédé de contrôle 4 également illustré sur cette figure.

Ces deux procédés peuvent être exécutés en parallèle ou consécutivement.

Le système de contrôle 18 peut en particulier, à partir de signaux transmis par les capteurs 14, déterminer d'une part la présence de points de contact 30 entre les doigts du préhenseur et l'objet, et d'autre part générer une information liée au glissement.

Comme illustré à la figure 2, les capteurs peuvent être agencés de sorte à permettre une détection de contact sur une surface étendue. En particulier, le contact entre le capteur d'un doigt et l'objet n'est pas nécessairement réduit à un point mais peut être une surface de contact 32. En fonction des signaux acquis par le capteur, le système de contrôle peut déterminer un point de contact représentatif 30 à partir de ces surfaces de contact 32.

Le capteur 14 peut comporter un capteur de pression, et le point de contact peut correspondre au point de pression le plus élevé de la surface, le point de contact étant par exemple le barycentre de la surface de contact 32.

Le procédé de calcul 5 comporte une étape de localisation de points de contact à partir de signaux acquis par les capteurs 14 du préhenseur et la détermination d'une répartition de ces points de contact dans un repère global $[(x_1,y_1,z_1),(x_2,y_2,z_2), ..., (x_n,y_n,z_n)]$.

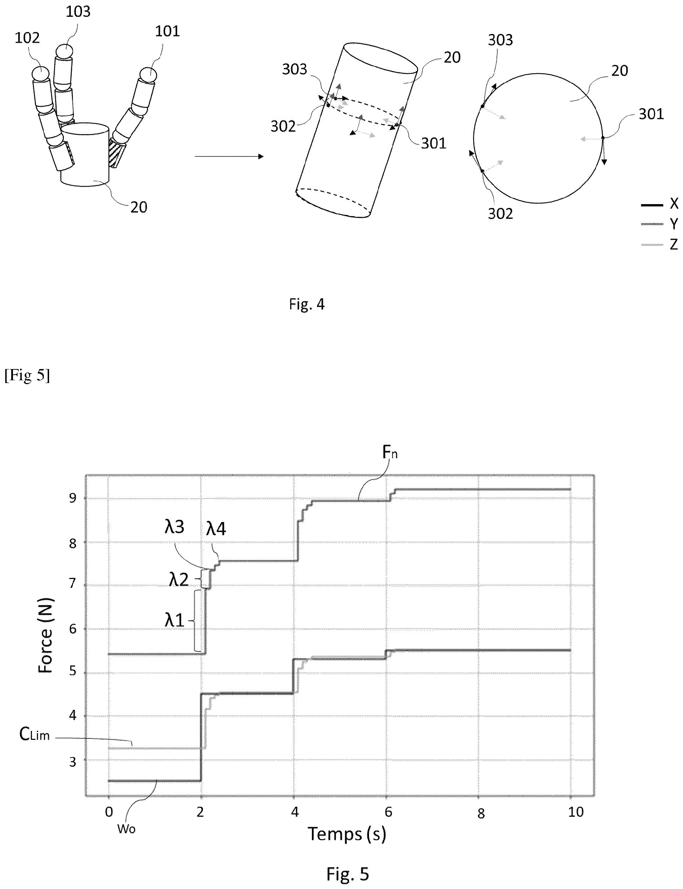

La figure 4 schématise un objet 20 et les points de contact 301, 302, 303 avec les doigts 101,102, 103 du préhenseur.

Le système de contrôle 18 peut être configuré de sorte à permettre la détection de la répartition des points de contact 301, 302, 303 autour de l'objet 20, dans un repère global (X,Y,Z).

La répartition dans le repère global (X,Y,Z) d'un point de contact 30 peut être déterminée à partir d'une position locale du point de contact par rapport au capteur 14 et de la configuration du préhenseur robotique.

Les rapports d'intensité à maintenir entre les forces appliquées aux différents points de contact permettant de tenir l'objet 20 peuvent être calculés à partir de la répartition des points de contact dans le repère global, par exemple par la détermination d'une base $f_0$ du noyau, Ker(G), d'une matrice G construite à partir de la répartition des points de contact.

De préférence, seules les forces internes sont considérées, autrement dit la matrice G est construite en supposant un découplage des forces internes et des forces de manipulation constituant les forces appliquées par le préhenseur sur l'objet manipulé.

Dans l'exemple de la figure 4, on peut estimer que les points de contact 301, 302, 303 sont répartis autour de l'objet 20, à une même hauteur. Dans un repère global, on peut définir que le point de contact 301 est à un angle $\theta_{301} = 0$; le point de contact 302 est à un angle $\theta_{302} = -5\pi/6$ et le point de contact 303 est à un angle $\theta_{303} = 5\pi/6$.

En supposant un découplage des forces internes et des forces de manipulation et que les force de friction des forces internes sont nulles, la matrice G de l'exemple de la figure 4 peut présenter la forme suivante :

[Math 2]

$$G = \begin{bmatrix} sin\theta & -sin\theta & 0 \\ -cos\theta & -cos\theta & -1 \\ 0 & 0 & 0 \\ 0 & 0 & 0 \\ 0 & 0 & 0 \\ 0 & 0 & 0 \end{bmatrix}$$

Avec

$$\theta = \theta_{303} = -\theta_{302} = 5\pi/6$$

Une base du noyau de G peut être :

[Math 3]

$$f_0 = \begin{bmatrix} \dfrac{-0,5}{\cos\left(\dfrac{5\pi}{6}\right)} \\ \dfrac{-0,5}{\cos\left(\dfrac{5\pi}{6}\right)} \\ 1 \end{bmatrix} \approx \begin{bmatrix} 0,577 \\ 0,577 \\ 1 \end{bmatrix}$$

Les rapports d'intensité à maintenir entre les forces appliquées aux différents points de contact correspondent donc ici à [0,577 ; 0,577, 1]. Autrement dit, pour une augmentation de la force interne appliquée au point de contact 301 de $\alpha$, l'augmentation de la force interne appliquée aux points de contact 302 et 303 sera de 0,577*$\alpha$.

Bien évidemment, cet exemple est présenté à des fins d'illustration et n'est pas limitatif. En particulier, les forces de friction (tangentielles) sont, si besoin, prises en considération dans la construction de la matrice G, notamment lorsque le préhenseur permet de les contrôler.

Ces rapports peuvent être déterminées par le système de contrôle 18 et conditionnent les commandes transmises aux actionneurs 16, en ce qui concerne le maintien de l'objet par le préhenseur, c'est-à-dire hors considération des forces appliquées pour faire bouger l'objet dans l'espace.

Le système de contrôle 18 est agencé de sorte à permettre la mise en oeuvre d'un procédé de contrôle itératif 4 comportant à chaque itération une étape de génération d'un score de détection de glissement entre l'objet manipulé et le préhenseur, et une étape d'ajustement des forces appliquées par le préhenseur sur l'objet de sorte à arrêter le glissement éventuel, l'ajustement comportant une augmentation de la force appliquée à l'objet d'autant plus importante que le score de détection de glissement est grand.

Par exemple, les capteurs 14 comportent des capteurs de vibration, notamment piézoélectriques, qui réagissent aux vibrations induites par le glissement. Le capteur de vibration peut être celui décrit dans l'article « Spectro-Temporal Recurrent Neural Network for Robotic Slip Détection with Piezoelectric Tactile Sensor », Ayral et al., 2023 IEEE/ASME International Conférence on Advanced Intelligent Mechatronics (AIM), 28-30 juin 2023. Seattle, Washington, USA, au chapitre II page 574, cet article étant incorporé ici par référence.

Une transformée de Fourrier rapide (FFT) 40 peut être appliquée aux signaux des capteurs 14 de sorte à permettre générer un spectrogramme permettant de concentrer la suite du traitement sur certaines fréquences représentatives du glissement et éliminer le bruit lié aux actionneurs, comme décrit dans l'article « *Spectro-Temporal Recurrent Neural Networkfor Robotic Slip Détection with Piezoelectric Tactile Sensor* ».

La densité spectrale de puissance (PSD) peut ainsi être calculée sur les signaux délivrés par les détecteurs piézoélectriques après soustraction de la moyenne sur des fenêtres temporelles de valeurs échantillonnées, pour fournir des spectrogrammes successifs servant de données d'entrée à un algorithme d'apprentissage automatique 42, préalablement entraîné peut être mis en oeuvre pour déterminer le score de détection de glissement.

L'algorithme d'apprentissage automatique peut comporter au moins un réseau de neurones, en particulier un réseau de neurones récurrent (RNN).

L'algorithme d'apprentissage automatique peut correspondre à celui décrit dans l'article « Spectro-Temporal Recurrent Neural Network for Robotic Slip Détection with Piezoelectric Tactile Sensor » , Ayral et al., 2023 IEEE/ASME International Conférence on Advanced Intelligent Mechatronics (AIM), 28-30 juin 2023. Seattle, Washington, USA, modifié par l'ajout d'une dernière couche de neurones normalisée avec une fonction *softmax* fournissant en sortie deux scores normalisés, dont l'un $\alpha$ est une valeur normalisée et bornée comprise entre 0 et 1 correspondant au niveau de confiance sur la présence du glissement, la valeur la plus élevée 1 correspondant à une confiance plus élevée sur la présence d'un glissement effectif que la valeur 0.

Le réseau de neurones peut présenter l'architecture décrite au point IV) chapitre B 1) page 575 de l'article « *Spectro-Temporal Recurrent Neural Network for Robotic Slip Détection with Piezoelectric Tactile Sensor* » ci-dessus et comporter une pile de 4 unités GRU comme décrit dans la publication K. Cho, B van Merrienboer, D Bahdanau, and Y Bengio, *« On the properties of neural machine translation : Encoder -décoder approches* »2014 https://arxiv.org/abs.1409.1259. Le réseau décrit dans l'article « *Spectro-Temporal Récurrent Neural Network for Robotic Slip Détection with Piezoelectric Tactile Sensor* » produit une représentation sur 32 canaux de chaque pas de temps (« séquence à séquence »), et les sorties sont classifiées de manière indépendantes par une couche linéaire de classification entièrement connectée.

L'apprentissage peut avoir été effectué pour chaque capteur sensible au glissement comme décrit au 2) du même chapitre, en entrainant simultanément la couche de classification et le RNN de bout à bout, avec des données d'apprentissage pouvant être générées de manière automatique comme décrit dans l'article au chapitre III.

On peut ainsi déterminer en parallèle en utilisant plusieurs instances de l'algorithme d'apprentissage automatique des scores de détection de glissement locaux ($\alpha_1$, $\alpha_2$, ..., $\alpha_n$ ) pour chacun des capteurs de glissement du préhenseur, et l'on peut prendre comme score de détection de glissement $\alpha$ la valeur maximale des scores locaux. En particulier, pour chaque capteur de glissement, une instance de l'algorithme est mise en oeuvre.

Alternativement, une seule instance de l'algorithme d'apprentissage automatique peut prendre en entrée une concaténation des signaux des capteurs de sorte à déterminer en sortie une valeur globale $\alpha$.

Un comparateur 44 peut comparer à chaque itération le score de détection de glissement $\alpha$ à une valeur seuil au-delà de laquelle le score $\alpha$ est pris en compte comme représentatif de la présence d'un glissement de l'objet par rapport au préhenseur.

De préférence, l'ajustement prend en compte la répartition des points de contact autour de l'objet, par application du procédé de calcul des rapports d'intensité décrit plus haut.

Un facteur d'augmentation des forces ou un incrément peut être déterminé à chaque itération à partir du score $\alpha$, tout en conservant les rapports d'intensité des forces à exercer par le préhenseur sur l'objet aux différents points de contact. L'ajustement peut ainsi comporter une augmentation des forces appliquées par le préhenseur sur l'objet proportionnelle à $\alpha$

Alternativement, l'augmentation peut être déterminée par comparaison du score $\alpha$ avec des valeurs seuils. Par exemple, si $\alpha$ est inférieur à une valeur seuil $V_0$, alors aucun ajustement n'est effectué, si $\alpha$ est dans l'intervalle $]V_0$ ; $V_1]$ alors l'ajustement est une augmentation de $\beta_1 * f_0$ ; ..., si $\alpha$ est dans l'intervalle $]V_{m-1}$ ; 1] alors l'ajustement est une augmentation de $\beta_m * f_0$, avec $\beta_1$,... des constantes.

Dans un mode de réalisation particulier, lorsque le score $\alpha$ est supérieur à une valeur seuil, l'ajustement consiste en une augmentation des forces internes d'une valeur prédéterminée. Les forces aux différents points de contact sont augmentées de cette valeur prédéterminée modulée des rapports d'intensité des forces à conserver entre les différents points de contact.

La figure 5 représente un exemple de courbes d'évolution des forces normales appliquées par un préhenseur sur un objet au cours du temps. Ces courbes sont comparées au poids de l'objet $W_o$ et aux forces de friction $C_{Lim}$ entre l'objet et le préhenseur permettant la préhension dudit objet par le préhenseur.

On peut identifier 3 débuts de glissement de l'objet à 2s, 4s et 6s.

La courbe $C_{Lim}$ correspond à la force de friction.

Dans l'exemple de la figure 5, plusieurs itérations du procédé de contrôle de glissement sont mises en oeuvre, la valeur d'itération étant variable $\lambda 1$, $\lambda 2$, $\lambda 3$, $\lambda 4$, et dépendant du score $\alpha$, afin d'arrêter le glissement détecté.

Ainsi, dans l'exemple de la figure 5, l'ajustement est progressif et dépend du score $\alpha$ estimé à chaque itération.

La courbe $F_n$ correspond à la somme des intensités des forces normales appliquées aux différents points de contact entre l'objet et le préhenseur.

L'invention n'est pas limitée aux exemples décrits.

On peut utiliser des capteurs autres que piézoélectriques comme capteurs sensibles au glissement, et des capteurs autres que piézorésistifs pour fournir l'information sur la localisation des points de contact ; on peut par exemple utiliser des capteurs de vision pour fournir l'information sur les points de contact.

Les capteurs peuvent ainsi être choisis parmi tout type de capteurs capacitifs et/ou de capteurs tactiles optiques tels que GelSight® ou FingerVision®.

Le procédé selon l'invention ne nécessitant pas la connaissance des forces aux points de contact, il est possible d'utiliser toute sorte de capteurs permettant d'obtenir des signaux à partir desquels un mouvement peut être détecté et permettant la localisation de points de contact.

Les capteurs peuvent former une matrice de capteurs unitaires.

La détermination des rapports d'intensité peut prendre en compte, en plus des forces normales, les forces de friction. Il est cependant préféré de ne pas les prendre en compte. La prise en compte des forces de friction améliore la précision, mais complexifie les étapes de calcul et le contrôle des forces, contraint par les capacités du préhenseur.

Le système de contrôle peut fonctionner de façon asynchrone au niveau de chaque point de contact.

On peut utiliser dans l'algorithme d'apprentissage automatique un réseau de neurone de type TCN.

**Revendications**

1. Préhenseur robotique comportant :

   - au moins deux doigts (10),
   - au moins un actionneur (16) pour agir sur les doigts (10) afin de serrer un objet (20), le préhenseur comportant au moins un capteur (14) sensible à un mouvement relatif entre l'objet manipulé par le préhenseur et ce dernier, ce capteur délivrant un signal de sortie,
   - un système de contrôle (18) configuré pour exécuter au moins un algorithme d'apprentissage automatique entraîné pour délivrer à partir du ou des signaux de sortie provenant du ou des capteurs (14) au moins un score ($\alpha$) de détection de glissement représentatif de la confiance de l'algorithme sur la présence d'un glissement, et pour transmettre des données de commande aux actionneurs (16) contrôlant les doigts, les données de commande étant générées de manière à lier l'intensité des forces appliquées par les doigts audit score, notamment en augmentant les forces de préhension sur l'objet d'autant plus fortement que le score de détection de glissement est élevé, le système de contrôle étant agencé pour faire l'acquisition d'une répartition des points de contact entre l'objet manipulé et les doigts du préhenseur et calculer des ratios définissant des rapports d'intensité à maintenir entre des forces internes de serrage appliquées aux points de contact, les rapports étant calculés à partir de la répartition des points de contact et de l'orientation des doigts dans un repère lié au préhenseur, les forces internes étant les forces appliquées aux points de contact qui s'équilibrent entre elles.

2. Préhenseur robotique selon la revendication précédente, le système de contrôle (18) étant agencé pour ajuster de manière itérative et incrémentale l'intensité des forces exercées par le préhenseur sur l'objet, la valeur de l'incrément étant variable et fonction de la valeur dudit score de détection de glissement à chaque itération.

3. Préhenseur selon l'une des revendications précédentes, l'algorithme d'apprentissage automatique comportant au moins un réseau de neurones, notamment de type RNN, agencé pour classifier au moins un signal d'entrée provenant d'au moins l'un desdits capteurs en deux classes correspondant respectivement à la présence d'un glissement et à l'absence d'un glissement, le réseau comportant une dernière couche avec deux neurones de sortie prenant des valeurs normalisées et une fonction faisant dépendre ces valeurs normalisées des scores de chaque classe, cette fonction de normalisation étant de préférence une fonction softmax.

4. Préhenseur selon la revendication précédente, le ou les capteurs comportant au moins un détecteur de vibrations, notamment piézoélectrique, le système de contrôle (18) étant agencé pour effectuer une analyse spectrale du signal afin de générer un spectrogramme, et le réseau de neurones étant entraîné pour classifier un segment temporel du spectrogramme.

5. Préhenseur selon l'une quelconque des revendications précédentes, le système de contrôle étant agencé pour délivrer un ensemble de scores de détection de glissement locaux ($\alpha i$, $\alpha_2$, ..., $\alpha_n$) pour différents capteurs, et générer le score de détection de glissement à partir de ces scores de détection locaux, notamment en prenant le maximum des scores de détection locaux, la médiane des scores de détection locaux, la moyenne des scores de détection locaux, le troisième quartile des scores de détection locaux ou le mode des score de détection locaux, et de préférence le score de détection correspond au maximum des scores de détection locaux.

6. Préhenseur selon l'une des revendications précédentes, dans lequel au moins un doigt, de préférence plusieurs doigts, de préférence encore tous les doigts, comportent plusieurs phalanges, chacun des doigts comportant au moins un capteur sensible de glissement, notamment un capteur piézoélectrique.

7. Préhenseur robotique selon l'une des revendications précédentes, comportant des capteurs configurés pour détecter les points de contact, notamment des capteurs piézorésistifs.

8. Préhenseur selon l'une quelconque des revendications précédentes, la commande des actionneurs s'effectuant sans calcul d'un coefficient de friction et/ou sans mesure d'une force de contact.

9. Préhenseur selon l'une quelconque des revendications précédentes comportant au moins 3 doigts, voire au moins 5 doigts, chaque doigt comportant de préférence plusieurs phalanges, chaque doigt comportant de préférence au moins un capteur sensible au glissement.

10. Préhenseur selon l'une des revendications précédentes, dans lequel le calcul des rapports d'intensité des forces aux différents points de contact comporte la détermination d'une matrice GRASP représentative des forces appliquées par le préhenseur sur l'objet aux différents points de contact, et le calcul d'une base du noyau de la matrice, la matrice GRASP étant déterminée au moyen de la localisation des points de contact et de l'orientation des doigts dans un repère lié au préhenseur

11. Préhenseur selon la revendication précédente, les forces appliquées sur l'objet étant modifiées d'un facteur proportionnel au score de détection de glissement tout en respectant les rapports d'intensité appliqués aux différents points de contact tels que déterminés par la matrice GRASP.

12. Procédé de contrôle d'un préhenseur manipulant un objet (20), notamment un préhenseur tel que défini dans l'une quelconque des revendications précédentes, le préhenseur comportant :

   - un ou plusieurs doigts,
   - au moins un actionneur (16) pour agir sur les doigts (10) afin de serrer l'objet (20),
   - au moins un capteur (14) sensible à un mouvement relatif entre l'objet manipulé par le préhenseur et ce dernier, ce capteur délivrant un signal de sortie,

   le procédé comportant :

   la génération d'au moins un score de détection de glissement à l'aide d'au moins un algorithme d'apprentissage automatique entraîné pour délivrer, à partir du ou des signaux de sortie provenant du ou des capteurs (14), ledit score ($\alpha$), ce dernier étant représentatif de la confiance de l'algorithme sur la présence d'un glissement, et la commande du ou des actionneurs (16) contrôlant les doigts de manière à lier l'intensité des forces appliquées par les doigts audit score, notamment en augmentant les forces de préhension sur l'objet d'autant plus fortement que le score de détection de glissement est élevé
   l'acquisition d'une répartition des points de contact entre l'objet manipulé et les doigts du préhenseur, et le calcul des ratios définissant des rapports d'intensité à maintenir entre des forces internes de serrage appliquées aux points de contact, les rapports étant calculés à partir de la répartition des points de contact et de l'orientation des doigts dans un repère lié au préhenseur, les forces internes étant les forces appliquées au points de contact qui s'équilibrent entre elles.

13. Procédé selon la revendication précédente, dans lequel l'intensité des forces exercées par le préhenseur sur l'objet est ajustée de manière itérative et incrémentale, la valeur de l'incrément étant variable et fonction de la valeur dudit score de détection de glissement à chaque itération.

14. Procédé selon l'une des revendications 12 et 13, l'algorithme d'apprentissage automatique comportant au moins un réseau de neurones, notamment de type RNN, agencé pour classifier au moins un signal d'entrée provenant d'au moins l'un desdits capteurs en deux classes correspondant respectivement à la présence d'un glissement et à l'absence d'un glissement, le réseau comportant une dernière couche avec deux neurones de sortie prenant des valeurs normalisées et une fonction faisant dépendre ces valeurs normalisées des scores de chaque classe, cette fonction de normalisation étant de préférence une fonction softmax.

15. Procédé selon la revendication 14, le ou les capteurs comportant au moins un détecteur de vibrations, notamment piézoélectrique, le procédé comportant une analyse spectrale du signal afin de connaître le contenu fréquentiel du signal et son évolution temporelle, et le réseau de neurones étant entraîné pour classifier un segment temporel du signal.

16. Procédé selon l'une quelconque des revendications 12 à 15, dans lequel un ensemble de scores de détection de glissement locaux ($\alpha i, \alpha_2, ..., \alpha_n$) est généré pour différents capteurs, et le score de détection de glissement est calculé à partir de ces scores de détection locaux, notamment en prenant le maximum des scores de détection locaux, la médiane des scores de détection locaux, la moyenne des scores de détection locaux, le troisième quartile des scores de détection locaux ou le mode des score de détection locaux, et de préférence le score de détection correspond au maximum des scores de détection locaux.

17. Procédé selon l'une des revendications 12 à 16, dans lequel le calcul des rapports d'intensité des forces aux différents points de contact comporte la détermination d'une matrice GRASP représentative des forces appliquées par le préhenseur sur l'objet aux différents points de contact, et le calcul d'une base du noyau de la matrice, la matrice GRASP étant déterminée au moyen de la localisation des points de contact et de l'orientation des doigts dans un repère lié au préhenseur.

**18.** Procédé selon la revendication précédente, les forces appliquées sur l'objet étant modifiées d'un facteur proportionnel au score de détection de glissement tout en respectant les rapports d'intensité appliqués aux différents points de contact tels que déterminés par la matrice GRASP.

**19.** Programme d'ordinateur comportant des instructions de code qui, lorsque le programme est exécuté sur un ou plusieurs processeurs d'un système de contrôle d'un préhenseur robotique selon l'une quelconque des revendications 1 à 11, conduisent celui-ci à mettre en oeuvre le procédé de contrôle selon l'une quelconque des revendications 12 à 18.

[Fig 1]

Fig. 1

[Fig 2]

Fig. 2

Fig.3

Fig. 4

[Fig 5]

Fig. 5

Europäisches
Patentamt

European
Patent Office

Office européen
des brevets

## RAPPORT DE RECHERCHE EUROPEENNE

Numéro de la demande

EP 25 15 0648

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | SU ZHE ET AL: "Force estimation and slip detection/classification for grip control using a biomimetic tactile sensor", 2015 IEEE-RAS 15TH INTERNATIONAL CONFERENCE ON HUMANOID ROBOTS (HUMANOIDS), IEEE, 3 novembre 2015 (2015-11-03), pages 297-303, XP032837575, DOI: 10.1109/HUMANOIDS.2015.7363558 * le document en entier * | 1-10, 12-17,19 | INV. B25J9/16 |
| Y | US 2021/122039 A1 (SU HARRY ZHE [US] ET AL) 29 avril 2021 (2021-04-29) * abrégé * * alinéas [0022] - [0154]; figures 1-6c * * revendications 1-20 * | 1-19 | |
| Y | GENTILE COSIMO ET AL: "Touch-and-slippage detection algorithm for prosthetic hands", MECHATRONICS, PERGAMON PRESS, OXFORD, GB, vol. 70, 26 juillet 2020 (2020-07-26), XP086274188, ISSN: 0957-4158, DOI: 10.1016/J.MECHATRONICS.2020.102402 [extrait le 2020-07-26] | 5,16 | |
| A | * abrégé; figure 17 * * chapitre 3.3 * | 1-4, 6-15, 17-19 | |
| A | CORDELLA F ET AL: "A force-and-slippage control strategy for a poliarticulated prosthetic hand", 2016 IEEE INTERNATIONAL CONFERENCE ON ROBOTICS AND AUTOMATION (ICRA), IEEE, 16 mai 2016 (2016-05-16), pages 3524-3529, XP032908603, DOI: 10.1109/ICRA.2016.7487533 * le document en entier * | 1-19 | |

**DOMAINES TECHNIQUES RECHERCHES (IPC)**

B25J
G05B

-/--

Le présent rapport a été établi pour toutes les revendications

| Lieu de la recherche | Date d'achèvement de la recherche | Examinateur |
|---|---|---|
| La Haye | 21 mai 2025 | Schmitt, Gilles |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 25 15 0648

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | AYRAL THEO ET AL: "Spectro-Temporal Recurrent Neural Network for Robotic Slip Detection with Piezoelectric Tactile Sensor", 2023 IEEE/ASME INTERNATIONAL CONFERENCE ON ADVANCED INTELLIGENT MECHATRONICS (AIM), IEEE, 28 juin 2023 (2023-06-28), pages 573-578, XP034390045, DOI: 10.1109/AIM46323.2023.10196263 * le document en entier * ----- | 1-19 | |
| Y | MELCHIORRI C: "Multiple whole-limb manipulation: An analysis in the force domain", ROBOTICS AND AUTONOMOUS SYSTEMS, ELSEVIER BV, AMSTERDAM, NL, vol. 20, no. 1, 1 avril 1997 (1997-04-01), pages 15-38, XP004122843, ISSN: 0921-8890, DOI: 10.1016/S0921-8890(96)00027-9 * le document en entier * ----- | 1-19 | |
| A | Sanghavi Saagar ET AL: "Lecture 17: Introduction to Grasping", , 31 décembre 2020 (2020-12-31), pages 1-6, XP093279698, Extrait de l'Internet: URL:https://pages.github.berkeley.edu/EECS -106/sp22-site/assets/scribe_notes/scribe_ lec_9A.pdf * le document en entier * ----- | 1-19 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 21 mai 2025 | Schmitt, Gilles |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

....................................................................

& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 25 15 0648

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-05-2025

| Document brevet cité au rapport de recherche | Date de publication | Membre(s) de la famille de brevet(s) | | Date de publication |
|---|---|---|---|---|
| US 2021122039 A1 | 29-04-2021 | CA | 3155340 A1 | 29-04-2021 |
| | | CN | 114585479 A | 03-06-2022 |
| | | EP | 4048480 A1 | 31-08-2022 |
| | | JP | 7447246 B2 | 11-03-2024 |
| | | JP | 2022552629 A | 19-12-2022 |
| | | KR | 20220066381 A | 24-05-2022 |
| | | US | 2021122039 A1 | 29-04-2021 |
| | | US | 2024033906 A1 | 01-02-2024 |
| | | WO | 2021080730 A1 | 29-04-2021 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 4048480 A
- US 2020019864 A
- US 2021122039 A1

**Littérature non-brevet citée dans la description**

- **J. BOHG** ; **M. PAVONE** ; **D. SADIGH**. Fundamentals of Grasping, Cours CS 237B: Principles of Robot Autonomy II. Université Stanford
- **RUOMIN SUI et al.** A Novel Incipient Slip Degree Evaluation Method and Its Application in Adaptative Control of Grasping Force. IEEE, 2023, 1545-5955
- **THÉO AYRAL et al.** Spectro-Temporal Recurrent Neural Network for Robotic Slip Détection with Piezoelectric Tactile Sensor. *2023 IEEE/ASME International Conférence on Advanced Intelligent Mechatronics (AIM), 28-30 juin 2023, Seattle, Washington, USA*, 28 June 2023
- **MARCO COSTANZO et al.** Detecting and Controlling Slip through Estimation and Control of the Sliding Velocity. *Appl. Sci.*, 2023, vol. 13, 921
- **SU ZHE et al.** Force estimation and slip detection/-classification for grip control using a biomimetic tactile sensor. *2015 IEEE-RAS 15th International Conférence on Humanoid Robots (Humanoids), Seoul, Korea (South*, 2015, 297-303
- **AYRAL et al.** Spectro-Temporal Recurrent Neural Network for Robotic Slip Détection with Piezoelectric Tactile Sensor. *2023 IEEE/ASME International Conférence on Advanced Intelligent Mechatronics (AIM), 28-30 juin 2023. Seattle, Washington, USA*, 28 June 2023, 574
- **AYRAL et al.** Spectro-Temporal Recurrent Neural Network for Robotic Slip Détection with Piezoelectric Tactile Sensor. *2023 IEEE/ASME International Conférence on Advanced Intelligent Mechatronics (AIM), 28-30 juin 2023. Seattle, Washington, USA*, 28 June 2023